# EUROPÄISCHE PATENTSCHRIFT

(11) **EP 1 196 803 B1**
(45) Veröffentlichungstag und Bekanntmachung des Hinweises auf die Patenterteilung: **02.04.2003**
(21) Anmeldenummer: 00942148.8
(22) Anmeldetag: 29.06.2000
(51) Int. Cl.: G02B 21/00, G02B 21/06

(54) **NAHFELDOPTISCHE UNTERSUCHUNGSVORRICHTUNG**
NEAR FIELD OPTICAL EXAMINATION DEVICE
DISPOSITIF D'EXAMEN OPTIQUE A CHAMP PROCHE

(30) Priorität: 29.06.1999 DE 19929875
(43) Veröffentlichungstag der Anmeldung: 17.04.2002
(73) Patentinhaber: Laser- und Medizin-Technologie GmbH, 14195 Berlin (DE)
(72) Erfinder: MÜLLER, Gerhard, D-14129 Berlin (DE); HELFMANN, Jürgen, D-14532 Berlin (DE)
(74) Vertreter: Eisenführ, Speiser & Partner
(86) Internationale Anmeldenummer: EP0006088
(87) Internationale Veröffentlichungsnummer: WO01001183

(56) Entgegenhaltungen:
- DE-A- 19 601 109
- DE-A- 19 858 490
- GB-A- 2 126 778
- US-A- 4 041 146
- POHL D W: "SCANNING NEAR-FIELD OPTICAL MICROSCOPY (SNOM)" ADVANCES IN OPTICAL AND ELECTRON MICROSCOPY,GB,LONDON, Bd. 12, 1991, Seiten 243-312, XP000372084

## Beschreibung

Die Erfindung betrifft einen Probenhalter, insbesondere für eine biologische Probe, zur Verwendung in einer Vorrrichtung zur nahfeldoptischen Bildgebung, mit einem Träger und einem mit dem Träger verbundenen Wandler, der ein Wandlermaterial enthält und zur Abgabe von Licht kleiner lateraler Quellenausdehnung bei Bestrahlung mit einem Elektronenstrahl ausgebildet ist.

Weiterhin betrifft die Erfindung eine Vorrichtung zur nahfeldoptischen Bildgebung, mit einer zum Ausstrahlen eines Elektronenstrahls ausgebildeten Elektronenstrahlquelle und einem Probenhalter.

Schließlich betrifft die Erfindung ein Herstellungsverfahren für einen Probenhalter zur Verwendung in einer Vorrichtung zur nahfeldoptischen Bildgebung.

Zur nahfeldoptischen Mikroskopie wird eine Vielzahl unterschiedlicher Sonden und Detektionsweisen benutzt. Gemeinsam ist diesen Methoden eine Vorgehensweise, bei der die Sonde zweidimensional (x-y-Ebene) bewegt wird und an jeder x-y-Position der Abstand der Sonde zur Probe (z-Richtung) nach einem bestimmten Kriterium eingestellt werden muß. Für die Abstandseinstellung werden unterschiedliche Wechselwirkungsmechanismen genutzt. Notwendig ist der kleine Abstand zwischen der Sonde und der Probe, um im Nahfeld der Sonde die nur dort detektierbare hohe Ortsauflösung dieser Mikroskopie zu erzielen.

Es existiert eine Reihe von Patenten, die in Form von Einzelsonden eine Nahfeldlichtquelle beinhalten. Hierbei ist sowohl eine Detektion über diese Apertur (DE 19531465; EP 0112401; US 5,770,855; US 5,821,409), als auch eine Beleuchtung beschrieben (DE 19531802; DE 19714346). Die Ausgestaltung dieser Nanolichtquelle mit porösem Silizium (EP 0726480), fluoreszierenden Materialien (DE 19504662; US 5,105,305) und ausgezogenen Fasern (US 5,286,970) oder durch Anregung von Exzitonen (US 5,362,963; US 5,546,223, US 5,675,433, US 5,789,742) ist ebenfalls beschrieben. Die Positionierung der Einzelsonden erfolgt als kombinierte Sensoren für AFM und SNOM (DE 19631498; US 5,354,985; US 5,821,409), STM und SNOM (DE 4106548; US 5,289,004; US 5,770,955), über Scherkraftdetektion (US 5,548,113, US 5,641,896) oder mittels der detektierten Nahfeld-Strahlung (US 5,304,795, US 5,666,197). Auch ein Einsatz als kombinierter Aktor und Sensor ist beschrieben (US 5,770,856).

Der Nachteil dieser Vorgehensweisen gerade bei biologischen Proben besteht in der notwendigen Zeitdauer für die Abstandseinstellung, die einen Großteil der gesamten Messzeit ausmacht. Hierdurch entstehen Aufnahmezeiten im Bereich von mehreren Minuten. In dieser Zeit kann sich die lebende Probe bewegen und verändern und damit zu einer fehlerhaften Bildgebung führen. Weiterhin wird die Abstandsmesswechselwirkung durch eine übliche Probenumgebung in Form einer Nährlösung gestört, was zu falschen Bilddaten oder gar zur Beschädigung der Probe und Sonde durch Sondenkontakt führen kann. In allen bekannten Verfahren wird ein Laser als Lichtquelle benutzt, der nur eine spektral schmalbandige Untersuchung der Probe erlaubt.

In der US 5,633,972 ist eine gebündelte Anordnung einer Vielzahl ausgezogener Fasern mit einem Abstand der Einzelquellen von 0.5 bis 2 µm beschrieben. Diese Anordnung hat den Nachteil, dass ein konventionelles Verfahren der Annäherung der Multifaser-Sonde an eine Probenoberfläche eingesetzt wird. Die Veränderung der Probe durch mehrere hundert ausgezogene Faserspitzen ist kritisch zu betrachten, ebenso wie die Chance, die Nahfeldbedingung über die gesamte Sondenfläche einzuhalten.

In den Schriften DE 196 01 109 A1 und WO97/25644 ist eine zweidimensionale Anordnung von Nanolichtquellen auf einem ebenen Substrat beschrieben. Die Lichtquellen werden über energiereiche Strahlung angeregt. Diese Anordnung erfordert keine mechanisch beweglichen Teile. Sie besteht aus einer feststehenden Platte mit integrierten Nahfeldlichtquellen. Die Probe wird auf der Platte aufgebracht. Hier ist jedoch durch eine Festkörperoberfläche aus Halbleitermaterial eine für biologische Proben ungeeignete Oberfläche geschaffen. Die Proben nehmen weder einen festen Abstand noch eine konstante Position über den Lichtquellen ein. Ein weiterer Nachteil besteht darin, dass die Lichtquellen durch kleine Hohlräume geschaffen sind, in die bestimmte Materialien eingebracht werden. Durch biologische Proben in Nährlösung werden diese Materialien kontaminiert. Dadurch wird eine stabile Funktionsweise verhindert.

Vor diesem Hintergrund liegt der Erfindung die Aufgabe zugrunde, einen Probenhalter sowie eine Vorrichtung zur nahfeldoptischen Untersuchung von biologischen Proben anzugeben, welche Einschränkungen der existierenden Techniken aufhebt. Eine weitere Aufgabe der Erfindung ist es, ein Herstellungsverfahren für einen derartigen Probenhalter anzugeben.

Insbesondere ist es wünschenswert, dass die Vorrichtung zur Untersuchung lebender biologischer Proben geeignet ist und eine ausreichend schnelle Bildgebung ermöglicht, so dass die Eigenbewegung der Probe oder physiologische Veränderungen beobachtet werden können. Dies erfordert Bildaufnahmezeiten im Sekundenbereich oder darunter und nicht im Minutenbereich, wie bei heutigen Techniken üblich.

Die Lösung dieser Aufgabe besteht in einem Probenhalter der eingangs genannten Art, der eine Adhäsionsschicht aufweist, die angeordnet und ausgebildet ist, die Probe im Nahfeld des Wandlers zu fixieren.

Für eine Vorrichtung zur nahfeldoptischen Bildgebung wird die Aufgabe durch einen Gegenstand mit den Merkmalen des Anspruchs 23 gelöst.

Hinsichtlich des Herstellungsverfahrens für einen Probenhalters wird die Aufgabe durch ein Verfahren mit den Merkmalen des Anspruchs 29 gelöst.

Es hat sich gezeigt, dass sich durch eine Adhäsionsschicht biologische Objekte, z.B. Zellen, stabil an einer Oberfläche fixieren lassen. Durch diese Adhäsionsschicht auf einer Unterlage, in der sich eine zweidimensionale Anordnung von Nanolichtquellen oder eine oder mehrere zweidimensional verschiebbare Nanolichtquellen befinden, gelingt es, die konstante Einhaltung des nahfeldoptischen Abstands zwischen Probe und Lichtquelle zu gewährleisten.

Mit dem Wegfallen einer Abstandsregelung, wie sie bei den Sonden-Verfahren notwendig ist, ist ein erheblicher Zeitgewinn verbunden, der in der schnellen Bildaufnahme im Bereich von Sekunden oder sogar darunter resultiert.

Ein Anformen der Probenoberfläche an die Lichtquellenmatrix wird durch eine geeignete Oberfläche der Adhäsionsschicht erreicht. Diese Adhäsionsschicht befindet sich als dünne Schicht (<30 nm) an der Oberfläche des Trägers und Wandlers. Die Adhäsionsschicht ist vorzugsweise biokompatibel. Sie wird bevorzugt aus Lipiden, beispielsweise Phospholipid, oder aus Zellulose-Derivaten, beispielsweise Carboxylmetoxy-Zellulose, aufgebaut.

Bei einem Ausführungsbeispiel der Erfindung enhält die Adhäsionsschicht ein Phospholipid. An das Phospholipid kann gezielt eine funktionelle Gruppe angebaut werden, so dass eine funktionelle Oberfläche entsteht, die nur die Anlagerung bestimmter dazu passender Gruppen erlaubt bzw. die Orientierung von Molekülen erzwingt.

Eine. konstante Schichtdicke ist wichtig für die Bildgebung. Die Dicke der Adhäsionsschicht ist daher bei einem bevorzugten Ausführungsbeispiel über einen Abschnitt ihrer Längs- und Quererstreckung konstant. Dieser Abschnitt umfasst zumindest den Bereich, in dem die Probe mit der Adhäsionsschicht verbunden wird. Die Adhäsionsschicht wird zur Erzielung einer konstanten Dicke als Mono- oder Bi-Layer von Molekülen aufgebracht. Dies kann durch Aufziehen der Layer geschehen oder auch durch das Sprengen von Vesikeln direkt auf der Oberfläche.

Durch Anwachsen oder Adhärieren von biologischen Objekten an dieser Schicht wird die notwendige Fixierung der Probe bei konstantem Abstand zu den Lichtquellen erzielt.

Das Wandlermaterial sendet bei Anregung mit Elektronen Licht mit vorzugsweise relativ hoher Intensität aus. Das Wandlermaterial wird bei einer Ausführungsform der Erfindung in kleinen Volumina in der Trägerschicht angeordnet. Eine Reihe von Materialien sind dazu geeignet, die sich in ihrer Ausbeute, Korngröße und spektralen Emission unterscheiden. Zum Einsatz kommen Phosphore, vorzugsweise Materialien mit exzitonischer Lichtemission wie Anthrazen oder Szintillatormaterialien (aus Lösungen auskristallisiert) wie z.B. BGO.

Der Wandler ist bei einem anderen Ausführungsbeispiel als homogene Wandlerschicht auf den Träger oder eine Trägerschicht aufgebracht. Bei der bevorzugten Ausführungsform des Wandlers als homogene Wandlerschicht kommen vorzugweise Phosphore zum Einsatz, die als dünne Beschichtung auf den Träger aufgebracht werden.

Eine alternative Ausführungsform des Probenhalters zeichnet sich dadurch aus, dass der Träger den Wandler bildet. Dabei kann auch eine Trägerschicht gleichzeitig die Wandlerschicht bilden. Die jeweilige Position der Lichtquelle bei der Bilderzeugung wird durch die Position des Elektronenstrahls bestimmt. Dies hat den Vorteil, dass die Position der Lichtquellen durch entsprechende Steuerung einer an sich bekannten Elektronen-Ablenkeinheit frei gewählt werden kann.

In einer hervorzuhebenden Ausführungsform mit eigenständiger Schutzfähigkeit wird das Wandlermaterial durch Umwandlung des Trägermaterials oder des Materials einer auf den Träger aufgebrachten Schicht erzeugt.

In einem Ausführungsbeispiel, bei dem das Wandlermaterial in kleinen Volumina umgewandeltes Material des Trägers enthält, ist Silizium durch Ätzen in mikrooder nanoporöses Silizium überführt. Mikro- oder nanoporöses Silizium leuchtet bei Elektronenanregung sehr stark im optischen Bereich. Hierfür sind Exzitonenzerfälle verantwortlich. Die Zerfallsenergie und die Lebensdauer der Exzitonen können durch die Strukturgröße, d.h. die Pprengröße des porösen Siliziums beeinflußt werden. Mit kleinerer Porengröße nimmt die der Bandabstand zwischen Valenzund Leitungsband zu (Quantum Confinement). Die Lumineszenz des Exzitonenzerfalls hat daher grundsätzlich eine um so höhere Photonenenergie, je geringer die. Porengröße ist. Lumineszenz, die Bereichen mit kleineren Poren entstammt, ist daher im Vergleich zu Lumineszenz aus Bereichen mit größeren Poren zu höheren Photonenenergien verschoben. Dies wird genutzt, um Nanolichtquellen in unterschiedlichen Spektralbereichen (UV bis NIR) durch eine gezielte Einstellung unterschiedlicher Porengrößen oder Porengrößenintervallen zu erzeugen.

In einer weiteren Ausführungsform, bei der das Wandlermaterial umgewandelt ist, weist das das Trägermaterial kleine Volumina auf, die gezielt mit geeigneten Störstellen dotiert sind, durch welche bei Elektronenstrahlanregung intensive, stark lokalisierte Lumineszenzen erzeugt werden. Soweit es sich bei dem Trägermaterial um einen Halbleiter handelt, können diese Lumineszenzen durch Einfang und Rekombination von Ladungsträgern an den Störstellen oder durch den Zerfall lokalisierter Exzitonen entstehen. Vorzugsweise ist dabei das dotierte Trägermaterial ein direkter Halbleiter wie GaAs. Bei dem dotierten Trägermaterial kann es sich auch um eine auf den Träger aufgebrachte Schicht handeln.

In einer weiteren Ausführungsform des Probenhalters mit eigenständiger Schutzfähigkeit weist das verwendete Wandlermaterial bei Elektronenbestrahlung eine Lichtemission mit einer spektralen Breite von mehr als 50 nm Wellenlänge auf. Dadurch kann die Probe in einem vergleichsweise breiten Spektralbereich untersucht werden. Durch die Erzeugung einer breiteren Verteilung von Porengrößen werden breitbandige Lichtquellen (Weißlicht) erzeugt, die in dieser Form bislang nicht für nahfeldoptische Untersuchungen zur Verfügung standen.

Eine Verbreiterung der spektralen Emission kann unter Ausnutzung an sich bekannter physikalischer Mechanismen der spektralen Verbreiterung erzielt werden. Ein solcher Mechanismus ist beispielsweise die Lebensdauerverbreiterung. Durch gezielte Einstellung der Größe des Anregungsvolumens kann beispielsweise die Bewegung der Exzitonen eingeschränkt werden, was einen schnelleren Zerfall der nach Elektronenstrahlanregung erzeugten Exzitonen bewirken kann. Die Reduzierung der Lebensdauer hat nach der Heisenberg'schen Unschärferelation eine entsprechende Verbreiterung der Energieverteilung der beim Exzitonen-Zerfall erzeugten Photonen zur Folge. Diese Möglichkeiten der Variation der spektralen Verteilung und der Nutzung einer breiten spektralen Emission werden erfindungsgemäß für die Spektralanalyse der Proben genutzt.

Dies erlaubt erstmalig die nahfeldoptische Spektroskopie an biologischen Proben. Es können mit hoher Ortsauflösung die optischen Eigenschaften wie Transmission oder Lumineszenz der Probe in Abhängigkeit von der Photonenenergie untersucht werden. Es kann mit einer Aufnahme ein mehrdimensionales Datenfeld erfasst werden, das zur Bildgebung mit hoher örtlicher und mit spektraler Auflösung geeignet ist. Dadurch wird die Einschränkung auf eine geringe spektrale Bandbreite z.B. bei Verwendung von Laserlichtquellen überwunden und mit einer breitbandigen Lichtquelle auch spektrale Information der Probe zugänglich gemacht. Auch die zeitliche Auflösung der Bildaufnahme wird mit der erfindungsgemäßen Lösung so weit verbessert, dass zusätzlich die zeitliche Entwicklung der Eigenschaften der Probe durch mit hoher Frequenz wiederholte Bildaufnahmen erfasst werden kann.

Bei einer weiteren Ausführungsform weist der Wandler eine Anordnung von kleinen Volumina des Wandlermaterials auf. Die Volumina sind mit kleinem relativem Abstand sich in zwei Richtungen regelmäßig wiederholend angeordnet.

In Weiterführung des Erfindungsgedankens werden die Lichtquellen eingebettet in einen Träger, der aus Materialien mit Silizium oder Galliumarsenid (GaAs) hergestellt wird. Diese Materialien haben den Vorteil, dass sie einem Waferherstellungsverfahren zugänglich sind.

Die Trägerstruktur wird vorzugsweise aus Si, SiO₂ oder Si₃N₄ aufgebaut. In diesem Träger sind kleine Volumina (Querausdehnung kleiner als 100 nm) eines Wandlermaterials eingebracht oder durch Umwandlung (z. B. Ätzen) des Trägers entstanden. Diese Volumina fungieren als Lichtquellen und sind vorzugsweise in einem zweidimensionalen Raster mit kleinem Abstand (kleiner als 200 nm) angeordnet.

Der Träger ist bei einem weiteren Ausführungsbeispiel zur Stabilisierung in Abständen von 10 bis 100 µm durch eine zusätzliche Verdickung verstärkt.

Alternativ oder ergänzend hierzu kann auf der einer Elektronenquelle zugewandten Seite des Trägers ein Elektronenfenster in Form einer planparallelen Platte mit geringer Absorption für Elektronen eingefügt werden. Diese besteht aus Beryllium oder Silizium. Das Fenster ist vorzugsweise so ausgebildet und angeordnet, dass es den Träger verstärkt.

Eine weitere Ausführungsform des erfindungsgemäßen Probenhalters enthält eine Schutzschicht zwischen dem Wandler und der Adhäsionsschicht, die ausgebildet ist, den Wandler vor Kontamination durch die Probe zu schützen. Es hat sich gezeigt, dass durch die zusätzliche Erzeugung einer Schutzschicht zwischen Lichtquellen- und Adhäsionsschicht eine Kontamination der Lichtquellen verhindert wird. Hier kommen vorzugsweise dünne (<20 nm) Kunststoffilme zum Anwendung,. vorzugsweise Polyacryl, das als Monomer aufgebracht und durch UV-Bestrahlung zu zweidimensionalen Monoschichten vernetzt wird.

In Abhängigkeit von der zu untersuchenden Probe und dem Nährmedium kann bereits die Adhäsionsschicht eine ausreichende Schutzfunktion wahrnehmen, so dass die Schutzschicht bei geeigneten Proben auch entfallen kann.

Ein weiteres Ausführungsbeispiel des erfindungsgemäßen Probenhalters weist einen Nährlösungsbehälter auf, der zur Aufnahme der Probe und einer Nährlösung ausgebildet ist. Der Nährlösungsbehälter ist zur Adhäsionsschicht hin offen und erlaubt so die Befestigung der Probe an der Adhäsionsschicht. Mit Hilfe dieses Behälters wird eine Kontamination der Vorrichtung mit Nährlösung vermieden. Vorzugsweise sind der Behälter und der Probenhalter so ausgebildet, dass der Behälter je nach Art der Probe wahlweise aufgesetzt oder entfernt werden kann.

Die erfindungsgemäße Vorrichtung zur nahfeldoptischen Bildgebung mit einer zum Ausstrahlen eines Elektronenstrahls ausgebildeten Elektronenstrahlquelle und einem Probenhalter ermöglicht aufgrund des in ihr vorgesehenen erfindungsgemäßen Probenhalters eine besonders schnelle Bildgebung, insbesondere bei der Untersuchung biologischer Proben.

Eine bevorzugte Ausführungsform ist derart ausgebildet, dass der Wandler im Vakuum durch den Elektronenstrahl anregbar ist.

Die dafür erforderliche Vakuumanordnung ist bei einer weiteren Ausführungsform der Erfindung derart ausgebildet, dass sich eine zu untersuchende Probe auf der der Elektronenstrahlquelle abgewandten Seite des Wandlers in Normaldruckatmosphäre befindet.

Die Vorrichtung und der Probenhalter sind bevorzugt derart ausgebildet, dass der Probenhalter entfernt werden kann, wenn kein Vakuum anliegt. Die hierfür erforderlichen Maßnahmen, insbesondere auf dem Gebiet der Vakuumtechnik, sind an sich bekannt.

Bei Proben, die dem Vakuum ausgesetzt werden können, kann auch in einer "Auflicht-Anordnung" gemessen werden. Der Wandler wird vom Elektronenstrahl beleuchtet, wobei die Probe vom Elektronenstrahl durchstrahlt wird. Das in seitliche Richtung emittierte oder gebeugte oder gestreute Licht kann zur optischen Bildgebung genutzt werden. In diesem Fall kann der Aufbau aus Fenster, Träger und Wandler dahingehend vereinfacht werden, dass die Strukturen in einer größeren Dicke ausgeführt werden und das Fenster entfällt. Der Bildkontrast besteht dann aus einer Kombination von Elektronenstrahlabsorption/-streuung und optischer Absorption.

Bei einem weiteren bevorzugten Ausführungsbeispiel der erfindungsgemäßen Vorrichtung ist der Elektronenstrahl rasterförmig über die Ebene führbar, in der das Wandlermaterial angeordnet ist. Hierfür ist eine entsprechende Elektronenoptik vorgesehen, die eine Ablenkeinheit und eine fokussierende Elektronenlinse enthält. Die für die Abrasterung des Wandlers erforderliche Technik ist beispielsweise von Rasterelektronenmikroskopen oder Rasterkathodolumineszenzanordnungen bekannt.

Mit einer Sammeloptik und einem Photodetektor, der im Fernfeld der Lichtquelle angeordnet ist, wird das optische Signal aufgenommen. Durch sequentielle Anregung der Lichtquellen an verschiedenen Positionen und Darstellung der Signalintensität in Abhängigkeit von der Lichtquellenposition wird nach und nach ein nahfeldmikroskopisches Bild erzeugt. Der Bildkontrast besteht im wesentlichen aus dem Objektkontrast im Nahfeld der Lichtquellen. Der Kontrast kann hierbei in einer vom jeweils durchstrahlen Bereich innerhalb der Probe abhängigen Lichtabsorption oder auch in einer ortsabhängig unterschiedlichen Fluoreszenz der Probe liegen.

Die erfindungsgemäße Vorrichtung umfaßt in einer besonders bevorzugten Ausführungsform Spektralanalysemittel, die angeordnet und ausgebildet sind, vom Wandlermaterial oder von einer Probe emittiertes Licht zur Spektralanalyse der Probe zu nutzen. Die hierfür erforderlichen, über die Sammeloptik hinausgehenden Lichtleitungs, -abbildungs- und Spektralanalysegeräte, die insbesondere für den spektral aufgelösten Nachweis schwacher Lichtsignale ausgelegt sein müssen, sind an sich bekannt. Auch hier kann beispielsweise auf die Rasterkathodolumineszenz verwiesen werden.

Die Elektronenstrahlquelle ist zum Ausstrahlen eines Elektronenstrahls mit einer Elektronenenergie zwischen 100 eV und 30 keV ausgebildet.

Weitere Ausführungsformen mit jeweils eigenständiger Schutzfähigkeit nutzen an Stelle einer Elektronenstrahlquelle andere Partikelstrahlquellen oder elektromagnetische Strahlung zur Anregung von Lichtemissionen des Wandlers, insbesondere im UV-, VUV-, Röntgen- oder Gammaspektralbereich.

Bei dem erfindungsgemäßen Herstellungsverfahren für einen Pröbenhalter zur Verwendung in einer Vorrrichtung zur nahfeldoptischen Bildgebung, bei dem ein Träger mit einem Wandler versehen wird und bei dem ein Schritt des Beschichtens des mit dem Wandler versehenen Trägers mit einer Adhäsionsschicht ausgeführt wird, wird die Adhäsionsschicht in Form von Mono- oder Bi-Lagen durch Aufziehen oder durch Sprengen von Vesikeln auf der Oberfläche aufgebracht. Diese Technik erlaubt die Herstellung der Adhäsionsschicht in der für die Nahfeldmikroskopie erforderlichen, besonders geringen Dicke von weniger als hundert nm. Zugleich werden mit dieser Technik konstante Schichtdicken erzielt, die wichtig sind, um die Proben im konstanten Abstand zu den Lichtquellen zu positionieren.

Bei einer Ausführungsform des erfindungsgemäßen Verfahrens ist ein Schritt des Beschichtens des Trägers mit einer Schutzschicht vorgesehen. Ein solcher Schutzfilm wird bevorzugt aus Polyacryl gefertigt als Monomer aufgebracht und durch UV-Betrahlung zu einer zweidimensionalen Monoschicht vernetzt. Die Dicke beträgt maximal 20 nm.

Weitere Merkmale und Vorteile der Erfindung werden im folgenden durch die Beschreibung einiger Ausführungsbeispiele anhand der Zeichnung verdeutlicht. Darin zeigt:
- Figur 1: ein erstes Ausführungsbeispiel einer erfindungsgemäßen Vorrichtung zur nahfeldoptischen Bildgebung,
- Figur 2: eine Abwandlung des Ausführungsbeispiels der Figur 1, mit dem Proben untersucht werden, die einem Vakuum ausgesetzt werden können,
- Figur 3: ein erstes Ausführungsbeispiel des erfindungsgemäßen Probenhalters in einer schematischen Querschnittsansicht,
- Figur 4: in gleicher Weise eine zweite Ausführungsform des erfindungsgemäßen Probenhalters,
- Figur 5: in ebenfalls stark vereinfachter Querschnittsansicht ein drittes Ausführungsbeispiel des erfindungsgemäßen Probenhalters und
- Figur 6: eine vierte, zum Ausführungsbeispiel nach Figur 3 alternative Ausführungsform des erfindungsgemäßen Probenhalters.

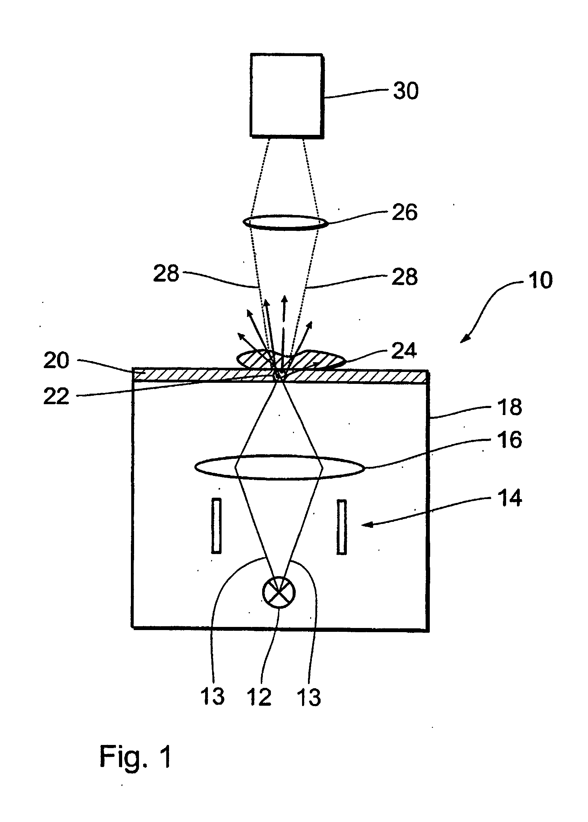

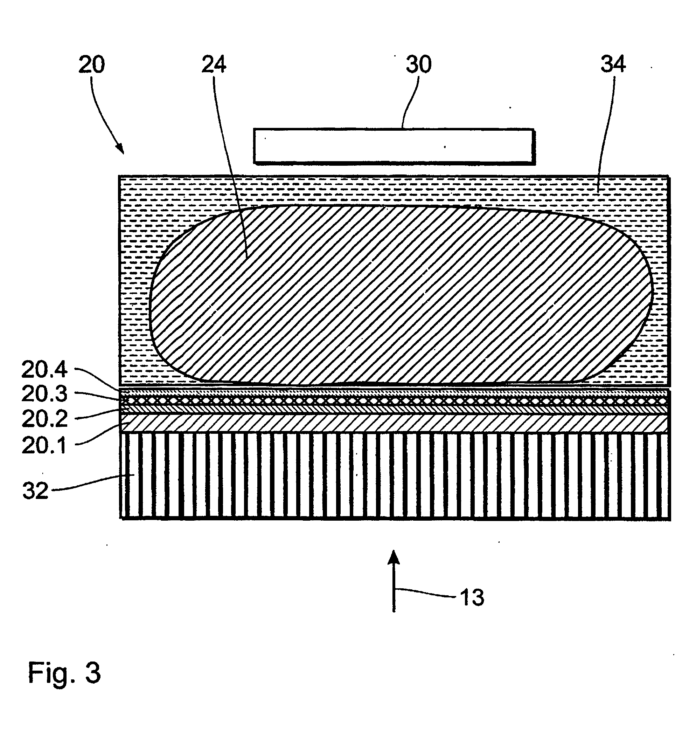

Figur 1 zeigt ein erstes Ausführungsbeispiel einer erfindungsgemäßen Vorrichtung 10 zur nahfeldoptischen Bildgebung in einer stark vereinfachten Querschnittsansicht. Eine Elektronenstrahlquelle 12 erzeugt einen durch Begrenzungslinien angedeuteten Elektronenstrahl 13, der auf seinem Weg eine Ablenkeinheit 14 und eine elektronenoptische Linse 16 passiert. Die gesamte Elektronenoptik der Vorrichtung ist in einer Vakuumkammer 18 untergebracht, die durch nicht näher dargestellte Einrichtungen evakuiert und belüftet werden kann. Der Elektronenstrahl trifft mit seinem Fokus auf einen Probenhalter 20, dessen Eigenschaften weiter unten anhand der Figuren 3 bis 6 näher erläutert werden. Mit Hilfe der Ablenkeinheit 14 ist der Elektronenstrahl in zwei orthogonale Richtungen senkrecht zur Strahlrichtung unabhängig voneinander ablenkbar, so dass der Elektronenstrahlfokus rasterförmig über eine Wandlerschicht (vgl. Figuren 3 bis 6) des Probenhalters 20 geführt werden kann und in der Wandlerschicht enthaltene Nanolichtquellen 22 zum Leuchten anregt. Das von der Lichtquelle 22 in unterschiedliche Richtungen emittierte Licht wird in Figur 1 durch Pfeile angedeutet.

Während sich die Elektronenstrahlführung vollständig im Vakuum befindet, ist auf der dem Elektronenstrahl abgewandten Seite des Probenhatters eine Probe 24 unter Normaldruck angeordnet. Die Probe ist durch eine hier nicht näher dargestellte Adhäsionsschicht stabil und im Nahfeldabstand auf dem Probenhalter 20 fixiert. Das durch inelastische Elektronenstreuung von der Nanolichtquelle 22 im Wandler erzeugte Licht durchdringt die Probe 24 und wird im optischen Fernfeld durch eine hochaperturige Nachweisoptik 26 gesammelt. Der Strahlengang ist durch Begrenzungslinien 28 angedeutet. Das eingefangene Lichtsignal wird auf eine lichtempfindliche Schicht eines Photodetektors 30 abgebildet, in ein der Intensität entsprechendes elektrisches Signal umgewandelt und einer nicht dargestellten Bildgeber- und Bildverarbeitungseinheit zugeführt. In der nicht maßstabsgerechten Darstellung der Figur 1 sind die Probe 24 und der Probenhalter 20 stark vergrößert dargestellt.

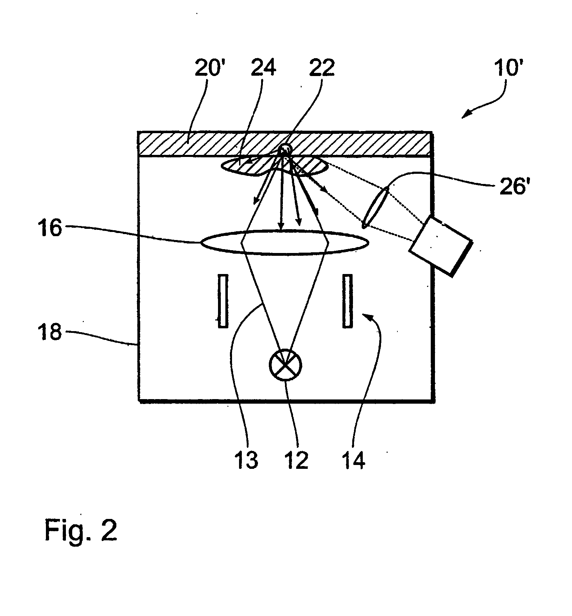

Figur 2 zeigt eine modifizierte Anordnung 10' des Ausführungsbeispiels der Figur 1 für Proben, die dem Vakuum ausgesetzt werden können. Gleiche Bezugszeichen kennzeichnen im Vergleich mit dem obigen Beispiel nach Figur 1 gleiche Bauteile. Die Probe 24 ist bei dem vorliegenden Ausführungsbeispiel in der Vakuumkammer 18 angeordnet und wird vom Elektronenstrahl 13 durchleuchtet. Die Probe 24 ist auf einem Probenhalter 20' befestigt. Im Unterschied zu Abbildung 1 kann in dieser Ausführungsform der Probenhalter 20' dicker ausgeführt werden. Der Probenhalter 20' unterscheidet sich ansonsten vom Probenhalter 20 in Figur 1 dadurch, dass seine Adhäsionsschicht auf der der Elektronenquelle zugewandten Seite angeordnet ist.

Durch den Elektronenstrahl 13 wird eine Nanolichtquelle 22 zur Emission von Licht angeregt, das die Probe durchstrahlt und seitlich durch ein hochaperturiges Objektiv 26' auf den Detektor 20 abgebildet wird.

Figur 3 zeigt einen erfindungsgemäßen Probenhalter 20 in einer ersten bevorzugten Ausführungsform. Der in der Zeichnung von unten kommende Elektronenstrahl 13 durchstrahlt zunächst ein Elektronenfenster 32, durchdringt anschließend eine Trägerschicht 20.1, auf der sich eine Wandierschicht 20.1 befindet. In der Wandlerschicht 20.2 wird der Elektronenstrahl 13 durch inelastische Streuung stark abgebremst. Die auf das Wandlermaterial übertragene Energie regt dieses zur Aussendung von Licht an. Der Bereich innerhalb des Wandlers, in dem die Elektronen abgebremst werden, stellt die Nanolichtquelle 22 dar.

Durch eine Schutzschicht 20.3 wird die Wandlerschicht 20.2 vor Kontamination und Oxidation geschützt. Auf der Schutzschicht 20.3 wiederum befindet sich eine Adhäsionsschicht 20.4, die der Anlagerung der Probe 24 dient. Nur der Teil der Probe 24, der sich im Nahfeld der Lichtquelle befindet, trägt wesentlich zum optischen Signal, das im Fernfeld gemessen wird, bei.

Die Probe 24 ist im vorliegenden Ausführungsbeispiel in einem Nährlösungsbehälter 34 angeordnet, der eine durch gestrichelte Schraffur angedeutete Nährlösung enthält.

Durch Bewegen des Fokus des Elektronenstrahls 13 in der Ebene der Wandlerschicht 20.2 wird die Position der Nanolichtquelle 22 und damit gleichzeitig der Ort der Probe, an dem gemessen wird, verändert. Durch die Darstellung der Intensität des optischen Signals in Abhängigkeit vom Lichtquellenort wird das Nahfeldbild der Probe gewonnen.

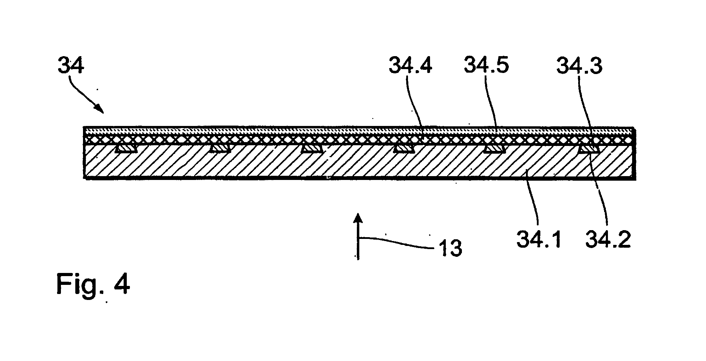

Figur 4 zeigt als eine alternative Ausführungsform der Erfindung einen Probenhalter 34. Der in der Zeichnung von unten kommende Elektronenstrahl 13 durchdringt eine Trägerschicht 34.1. Im oberen Bereich der Trägerschicht 34.1 ist in kleinen Volumina 34.2 ein durch Umwandlung des Trägermaterials entstandenes Wandlermaterial 34.3 angeordnet. Hierbei handelt es sich um mikroporöses Silizium. Durch Elektronenstrahlanregung mit dem Elektronenstrahl wird das Wandlermaterial 34.3 zum intensiven Leuchten angeregt. Eine Schutzschicht 34.4 schützt das mikroporöse Silizium 34.3 vor Kontamination. Die Schutzschicht wird wiederum von einer Adhäsionsschicht 34.5 bedeckt, die der Befestigung der Probe 24 (hier nicht dargestellt) dient. Ansonsten kann der weitere Aufbau des Probenhalters identisch zur Beschreibung in Figur 3 erfolgen.

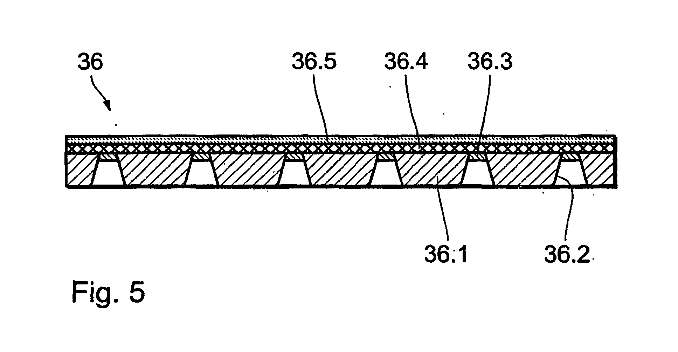

Figur 5 zeigt als weitere Ausführungsform der Erfindung eine Probenhalterung 36 mit einer Trägerstruktur 36.1. Im Unterschied zur Probenhalterung 34 nach Figur 4 sind in der Trägerstruktur 36.1 konische Löcher 36.2 ausgebildet, in denen durch Verdampfen des Lösemittels einer Lösung von Anthrazen oder Szintillatoren ein Wandlermaterial 36.3 auskristallisiert ist. Das Wandlermaterial 36.3 sendet bei Elektronenstrahlanregung intensiv Licht aus und wird wie anhand von Figur 3 beschrieben zur Bildgebung genutzt.

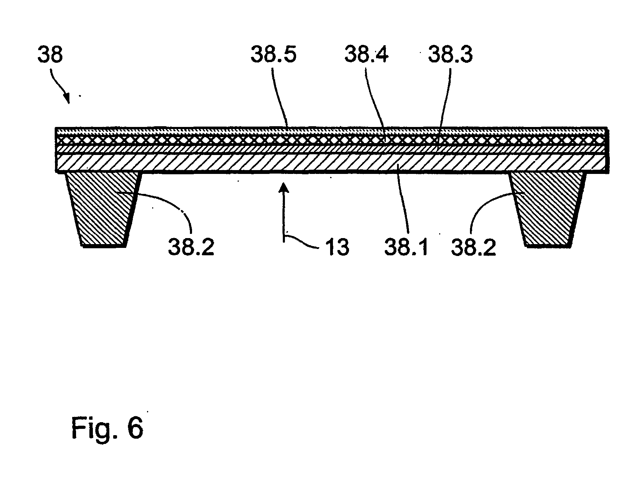

Figur 6 zeigt als zum Ausführungsbeispiel nach Figur 3 alternative Ausführungsform einen Probenhalter 38. Eine besonders dünne Trägermatrix 38.1 wird dadurch ermöglicht, dass diese durch in größerem Abstand von 10-100 µm voneinander entfernte Tragestrukturen 38.2 verstärkt ist. Die Tragestrukturen nehmen die Kräfte der Druckdifferenz zwischen dem Vakuum auf der der Elektronenquelle 12 (vgl. Figur 1) zugewandten Seite und den Normaldruck auf der der Elektronenquelle 12 abgewandten Seite auf. Die besonders dünne Trägerschicht hat den Vorteil, dass der Elektronenstrahl 13 nur geringfügig gestreut wird. Dadurch wird die Ausdehnung der zum Leuchten angeregten Nanolichtquelle 22 (vgl. Figur 1) verringert, wodurch letztlich die laterale Auflösung des Nahfeldmikroskops erhöht wird.

## Patentansprüche

1. Probenhalter (20; 20'; 34; 36; 38), insbesondere für eine biologische Probe (24), zur Verwendung in einer Vorrrichtung (10; 10') zur nahfeldoptischen Bildgebung, mit einem Träger (20.1; 34.1; 36.1; 38.1, 38.2) und einem mit dem Träger verbundenen Wandler (20.2; 34.2, 34.3; 36.3, 36.3; 38.3), der ein Wandlermaterial (34.3, 36.3) enthält und zur Abgabe von Licht kleiner lateraler Quellenausdehnung bei Bestrahlung mit einem Elektronenstrahl (13) ausgebildet ist, **gekennzeichnet durch** eine Adhäsionsschicht (20.4; 34.5; 36.5; 38.5), die angeordnet und ausgebildet ist, die Probe (24) im Nahfeld des Wandlers (20.2; 34.2, 34.3; 36.3, 36.3; 38.3) zu fixieren.

2. Probenhalter nach Anspruch 1, **dadurch gekennzeichnet, dass** die Adhäsionsschicht (20.4; 34.5; 36.5; 38.5) eine Dicke von maximal 30 nm hat.

3. Probenhalter nach Anspruch 1 oder 2, **dadurch gekennzeichnet, dass** die Dicke der Adhäsionsschicht (20.4; 34.5; 36.5; 38.5) über einen Abschnitt ihrer Längs- und Quererstreckung eine konstant ist.

4. Probenhalter nach einem der Ansprüche 1 bis 3, **dadurch gekennzeichnet, dass** die Adhäsionsschicht (20.4; 34.5; 36.5; 38.5) ein Lipid oder ein Zellulose-Derivat enthält.

5. Probenhalter nach einem der Ansprüche 1 bis 4, **dadurch gekennzeichnet, dass** die Adhäsionsschicht (20.4; 34.5; 36.5; 38.5) als Molekül-Monolage oder Molekül-Bilage ausgebildet ist.

6. Probenhalter nach Anspruch 4 oder 5, **dadurch gekennzeichnet, dass** die Adhäsionsschicht (20.4; 34.5; 36.5; 38.5) ein Phospholipid enthält.

7. Probenhalter nach Anspruch 4, 5 oder 6, **dadurch gekennzeichnet, dass** die Adhäsionsschicht (20.4; 34.5; 36.5; 38.5) Carboxylmetoxy-Zellulose enthält.

8. Probenhalter nach Anspruch einem der vorstehenden Ansprüche, **gekennzeichnet durch** ein Wandlermaterial (34.3; 36.3), das bei Elektronenbestrahlung Licht mit einer spektralen Breite von mehr als 50 nm Wellenlänge emittiert.

9. Probenhalter nach einem der vorstehenden Ansprüche, **dadurch gekennzeichnet, dass** das Wandlermaterial (34.3; 36.3) in kleinen Volumina (34.2; 34.3) in dem Träger eingebettet ist.

10. Probenhalter nach Anspruch 9, **dadurch gekennzeichnet, dass** die Volumina (34.2; 36.2) mit kleinem relativem Abstand sich in zwei Richtungen regelmäßig, wiederholend angeordnet sind.

11. Probenhalter nach einem der vorstehenden Ansprüche, **dadurch gekennzeichnet, dass** das Wandlermaterial (36.3) ein Phosphor enthält.

12. Probenhalter nach einem der Ansprüche 1 bis 11, **dadurch gekennzeichnet, dass** das Wandlermaterial (36.3) Anthrazen enthält.

13. Probenhalter nach einem der vorstehenden Ansprüche, **dadurch gekennzeichnet, dass** das Wandlermaterial (34.3) in kleinen Volumina (34.2) umgewandeltes Material des Trägers (34.1) enthält.

14. Probenhalter nach einem der vorstehenden Ansprüche, **dadurch gekennzeichnet; dass** das Wandlermaterial (34.3) mikro- oder nanoporöses Silizium enthält.

15. Probenhalter nach einem der Ansprüche 1 bis 8 und 11 bis 14, **dadurch gekennzeichnet, dass** das Wandlermaterial (20.2; 38.3) homogen auf dem Träger (20.1; 38.1) verteilt ist.

16. Probenhalter nach Anspruch 14, **dadurch gekennzeichnet, dass** der Träger den Wandler bildet.

17. Probenhalter nach einem der vorstehenden Ansprüche, **dadurch gekennzeichnet, dass** der Träger (20.1; 34.1; 36.1; 38.1, 38.2) aus einem Halbleitermaterial, vorzugsweise Si, SiO₂ , Si₃N₄ oder GaAs besteht.

18. Probenhalter nach einem der vorstehenden Ansprüche, **dadurch gekennzeichnet, dass** der Träger (38.1) in Abständen von 10 bis 100 µm durch eine zusätzliche Verdickung (38.2) verstärkt ist.

19. Probenhalter nach einem der vorstehenden Ansprüche, **gekennzeichnet durch** ein für Elektronen durchlässiges Fenster (32) auf der der Adhäsionsschicht (20.4) abgewandten Seite des Trägers (20.1), das vorzugsweise Beryllium oder Silizium enthält.

20. Probenhalter nach Anspruch 19, **dadurch gekennzeichnet, dass** das Fenster (32) ausgebildet und angeordnet ist, den Träger (20.1) zu verstärken.

21. Probenhalter nach einem der vorstehenden Ansprüche, **gekennzeichnet durch** eine Schutzschicht (20.3; 34.4; 36.4; 38.4) zwischen dem Wandler (20.2; 34.2, 34.3; 36.3, 36.3; 38.3) und der Adhäsionsschicht (20.4; 34.5; 36.5; 38.5), die ausgebildet ist, den Wandler vor Kontamination **durch** die Probe (24) zu schützen.

22. Probenhalter nach einem der vorstehenden Ansprüche, **gekennzeichnet durch** einen am Probenhalter lösbar befestigten Nährlösungsbehälter (34), der zur Aufnahme der Probe (24) und einer Nährlösung ausgebildet ist.

23. Vorrichtung (10; 10') zur nahfeldoptischen Bildgebung, mit einer zum Ausstrahlen eines Elektronenstrahls (13) ausgebildeten Elektronenstrahlquelle (12) und einem Probenhalter, **dadurch gekennzeichnet, dass** der Probenhalter (20; 20'; 34; 36; 38) entsprechend einem der Ansprüche 1 bis 21 ausgebildet ist.

24. Vorrichtung nach Anspruch 23, **gekennzeichnet durch** eine Vakuumanordnung (18), die derart ausgebildet ist, dass ein mit dem Probenhalter (20; 20'; 34; 36; 38) verbundener Wandler (20.2; 34.2, 34.3; 36.3, 36.3; 38.3) im Vakuum **durch** den Elektronenstrahl (13) anregbar ist.

25. Vorrichtung nach einem der Ansprüche 23 oder 24, **dadurch gekennzeichnet, dass** der Elektronenstrahl (13) mit Hilfe einer Ablenkeinheit (14) rasterartig über die Ebene des Probenhalters (20; 20'; 34; 36; 38) führbar ist, in der ein Wandlermaterial (20.2; 34.3; 36.3; 38.3) angeordnet ist.

26. Vorrichtung nach einem der Ansprüche 23 bis 25, **dadurch gekennzeichnet, dass** die Vakuumanordnung (18) derart ausgebildet ist, dass sich eine zu. untersuchende Probe (24) auf der der Elektronenstrahlquelle (12) abgewandten Seite des Wandlers (20) in Normaldruckatmosphäre befindet.

27. Vorrichtung nach einem der Ansprüche 23 bis 26, **dadurch gekennzeichnet, dass** die Elektronenstrahlquelle (12) zum Ausstrahlen eines Elektronenstrahls mit einer Elektronenenergie zwischen 100 eV und 30 keV ausgebildet ist.

28. Vorrichtung nach einem der Ansprüche 23 bis 27, **gekennzeichnet durch** Spektralanalysemittel (30), die angeordnet und ausgebildet sind, vom Wandlermaterial (20.2; 34.3; 36.3; 38.3) oder von der Probe (24) emittiertes Licht zur Spektralanayse der Probe zu nutzen.

29. Herstellungsverfahren für einen Probenhalter (20; 20'; 34; 36; 38) zur Verwendung in einer Vorrrichtung (10;10') zur nahfeldoptischen Bildgebung, bei dem ein Träger (20.1; 34.1; 36.1; 38.1, 38.2) mit einem Wandler (20.2; 34.2, 34.3; 36.3, 36.3; 38.3), der ein Wandlermaterial enthält und zur Abgabe von Licht kleiner lateraler Quellenausdehnung bei Bestrahlung mit einem Elektronenstrahl ausgebildet ist, versehen wird und bei dem der Träger anschließend mit einer Adhäsionsschicht (20.4; 34.5; 36.5; 38.5) beschichtet wird, wobei die Adhäsionsschicht (20.4; 34.5; 36.5; 38.5) in Form von Mono- oder Bi-Lagen durch Aufziehen oder durch Sprengen von Vesikeln aufgebracht wird.

30. Verfahren nach Anspruch 29, **gekennzeichnet durch** einen Schritt des Beschichtens des Trägers (20.1; 34.1; 36.1; 38.1, 38.2) mit einer Schutzschicht (20.3; 34.4; 36.4; 38.4), bei dem ein Polyacryl zunächst als Mönomer aufgebracht wird und anschließend **durch** UV-Betrahlung zu einer zweidimensionalen Monoschicht vernetzt wird.

## Revendications

1. Porte-échantillon (20; 20'; 34; 36; 38), notamment pour un échantillon biologique (24), destiné à être utilisé dans un dispositif (10; 10') pour délivrer une image dans le champ optique de proximité, comportant un support (20.1; 34.1; 36.1; 38.1, 38.2) et un transducteur (20.2; 34.2, 34.3; 36.3, 36.3; 38.3), qui est relié au support, contient un matériau de transducteur (34.3, 36.3) et est agencé pour délivrer une lumière ayant une faible étendue latérale de source lors d'une irradiation par un faisceau d'électrons (13), **caractérisé par** une couche adhésive (20.4; 34.5; 36.5; 38.5) qui est disposée et agencée de manière à fixer l'échantillon (24) dans le champ de proximité du transducteur (20.2; 34.2, 34.3; 36.3, 36.3; 38.3).

2. Porte-échantillon selon la revendication 1, **caractérisé en ce que** la couche adhésive (20.4; 34.5; 36.5; 38.5) possède une épaisseur égale au maximum à 30 nm.

3. Porte-échantillon selon la revendication 1 ou 2, **caractérisé en ce que** l'épaisseur de la couche adhésive (20.4; 34.5; 36.5; 38.5) sur une section de son étendue longitudinale et de son étendue transversale est constante.

4. Porte-échantillon selon l'une des revendications 1 à 3, **caractérisé en ce que** la couche adhésive (20.4; 34.5; 36.5; 38.5) contient un lipide ou un dérivé de cellulose.

5. Porte-échantillon selon l'une des revendications 1 à 4, **caractérisé en ce que** la couche adhésive (20.4; 34.5; 36.5; 38.5) est agencée sous la forme d'une monocouche moléculaire ou d'une couche double moléculaire.

6. Porte-échantillon selon la revendication 4 ou 5, **caractérisé en ce que** la couche adhésive (20.4; 34.5; 36.5; 38.5) contient un phospholipide.

7. Porte-échantillon selon la revendication 4, 5 ou 6, **caractérisé en ce que** la couche adhésive (20.4; 34.5; 36.5; 38.5) contient de la carboxyméthoxycellulose.

8. Porte-échantillon selon l'une des revendications précédentes, **caractérisé par** un matériau de transducteur (34.3; 36.3), qui, lorsqu'elle est irradié par un faisceau d'électrons, émet une lumière spectrale supérieure à une longueur d'onde de 50 nm.

9. Porte-échantillon selon l'une des revendications précédentes, **caractérisé en ce que** le matériau de transducteur (34.3; 36.3) est inséré en de faibles volumes (34.2; 34.3) dans le support.

10. Porte-échantillon selon la revendication 9, **caractérisé en ce que** les volumes (34.2; 36.2) sont disposés de manière régulièrement répétitive à une distance relativement faible, dans deux directions.

11. Porte-échantillon selon l'une des revendications précédentes, **caractérisé en ce que** le matériau de transducteur (36.3) contient une substance luminescente.

12. Porte-échantillon selon l'une des revendications 1 à 11, **caractérisé en ce que** le matériau de transducteur (36.3) contient de l'anthracène.

13. Porte-échantillon selon l'une des revendications précédentes, **caractérisé en ce que** le matériau de transducteur (34.3) contient un matériau du support (34.1) converti en de faibles volumes (34.2).

14. Porte-échantillon selon l'une des revendications précédentes, **caractérisé en ce que** le matériau de transducteur (34.3) contient du silicium microporeux ou nanoporeux.

15. Porte-échantillon selon l'une des revendications 1 à 8 et 11 à 14, **caractérisé en ce que** le matériau de transducteur (20.2; 38.3) est réparti de façon homogène sur le support (20.1; 38.1).

16. Porte-échantillon selon la revendication 14, **caractérisé en ce que** le support forme le transducteur.

17. Porte-échantillon selon l'une des revendications précédentes, **caractérisé en ce que** le support (20.1; 34.1; 36.1; 38.1, 38.2) est constitué par un matériau semiconducteur, de préférence du Si, SiO₂, du Si₃O₄ ou du GaAs.

18. Porte-échantillon selon l'une des revendications précédentes, **caractérisé en ce que** le support (38.1) est renforcé à des distances de 10 à 100 µm par un épaississement supplémentaire (38.2).

19. Porte-échantillon selon l'une des revendications précédentes, **caractérisé par** une fenêtre (32) perméable pour les électrons sur le côté, tourné à l'opposé de la couche adhésive (20.4), du support (20.1) qui contient de préférence du béryllium ou du silicium.

20. Porte-échantillon selon la revendication 19, **caractérisé en ce que** la fenêtre (32) est agencée et disposée de manière à renforcer le support (20.1).

21. Porte-échantillon selon l'une des revendications précédentes, **caractérisé par** une couche de protection (20.3; 30.4; 36.4; 38.4) entre le transducteur (20.2; 34.2, 34.3; 36.3, 36.3; 38.3) et la couche adhésive (20.4; 34.5; 36.5; 38.5), qui est agencée de manière à protéger le transducteur vis-à-vis d'une contamination par l'échantillon (24).

22. Porte-échantillon selon l'une des revendications précédentes, **caractérisé par** un récipient (34) contenant une solution nutritive, qui est fixé de façon amovible au porte-échantillon et qui est agencé pour recevoir l'échantillon (24) et une solution nutritive.

23. Dispositif (10; 10') pour la formation d'une image dans le champ de proximité optique, comportant une source de faisceau d'électrons (11), qui est agencée de manière à émettre un faisceau d'électrons (13), et un porte-échantillon, **caractérisé en ce que** le porte-échantillon (20, 20'; 34; 36; 38) est agencé d'une manière qui correspond à l'une des revendications 1 à 21.

24. Dispositif selon la revendication 23, **caractérisé par** un dispositif à vide (18), qui est agencé de telle sorte qu'un transducteur (20.2; 34.2, 34.3; 36.3, 36.3; 38.3) qui est relié au porte-échantillon (20, 20'; 34; 36; 38), peut être excité sous vide au moyen du faisceau d'électrons (13).

25. Dispositif selon l'une des revendications 23 ou 24, **caractérisé en ce que** le faisceau d'électrons (13) peut être guidé selon une trame, au moyen d'une unité de déviation (14), au-dessus du plan du porte-échantillon (20, 20'; 34; 36; 38), dans lequel est disposé un matériau de transducteur (20.2; 34.3; 36.3; 38.3).

26. Dispositif selon l'une des revendications 23 à 25, **caractérisé en ce que** le dispositif à vide (18) est agencé de telle sorte qu'un échantillon à examiner (24) est disposé sur le côté du transducteur (20) tourné à l'opposé de la source du faisceau d'électrons (12), dans une atmosphère à pression normale.

27. Dispositif selon l'une des revendications 23 à 26, **caractérisé en ce que** la source (12) du faisceau d'électrons est agencée de manière à émettre un faisceau d'électrons possédant une énergie comprise entre 100 eV et 30 keV.

28. Dispositif selon l'une des revendications 23 à 27, **caractérisé par** des moyens d'analyse spectrale (30), qui sont disposés et agencés pour l'analyse spectrale de l'échantillon une lumière émise par le matériau de transducteur (20.2; 34.2, 34.3; 36.3, 36.3; 38.3) ou par l'échantillon (24).

29. Procédé de fabrication d'un porte-échantillon (20, 20'; 34; 36; 38) destiné à être utilisé dans un dispositif (10; 10') pour former une image dans le champ de proximité optique, dans lequel un support (20.1; 34.1; 36.1; 38.1, 38.2) est équipé d'un transducteur (20.2; 34.2, 34.3; 36.3, 36.3; 38.3), qui contient un matériau de transducteur et est conçu pour délivrer une lumière ayant une faible étendue latérale de source lors de l'irradiation avec un faisceau d'électrons, et selon lequel on recouvre ensuite le support avec une couche adhésive (20.4; 34.5; 36.5; 38.5), la couche adhésive (20.4; 34.5; 36.5; 38.5) étant appliquée sous la forme de monocouches ou de couches doubles par ouverture ou par éclatement de vésicules.

30. Procédé selon la revendication 29, **caractérisé par** une étape du revêtement du support (20.1; 34.1; 36.1; 38.1; 38.2) par une couche de protection (20.3; 34.4; 36.4; 36.4), selon lequel on dépose tout d'abord une matière polyacrylique en tant que monomère et ensuite on la réticule par une irradiation aux ultraviolets pour former une monocouche bidimensionnelle.

## Claims

1. A sample holder (20; 20'; 34; 36; 38), in particular for a biological sample (24), for use in an apparatus (10; 10') for near-field optical imaging, comprising a carrier (20.1; 34.1; 36.1; 38.1, 38.2) and a converter (20.2; 34.2, 34.3; 36.3, 36.3; 38.3) which is connected to the carrier and which contains a converter material (34.3, 36.3) and is adapted to emit light of small lateral source extent upon irradiation with an electron beam (13), **characterized by** an adhesion layer (20.4; 34.5; 36.5; 38.5) which is arranged and designed to fix the sample (24) in the near field of the converter (20.2; 34.2, 34.3; 36.3, 36.3; 38.3).

2. A sample holder according to claim 1 **characterized in that** the adhesion layer (20.4; 34.5; 36.5; 38.5) is of a thickness of a maximum of 30 nm.

3. A sample holder according to claim 1 or claim 2 **characterized in that** the thickness of the adhesion layer (20.4; 34.5; 36.5; 38.5) is constant over a portion of its lengthwise and transverse extent.

4. A sample holder according to one of claims 1 to 3 **characterized in that** the adhesion layer (20.4; 34.5; 36.5; 38.5) includes a lipid or a cellulose derivative.

5. A sample holder according to one of claims 1 to 4 **characterized in that** the adhesion layer (20.4; 34.5; 36.5; 38.5) is in the form of a molecule mono-layer or molecule bi-layer.

6. A sample holder according to claim 4 or claim 5 **characterized in that** the adhesion layer (20.4; 34.5; 36.5; 38.5) includes a phospholipid.

7. A sample holder according to claim 4, claim 5 or claim 6 **characterized in that** the adhesion layer (20.4; 34.5; 36.5; 38.5) contains a carboxylmetoxy cellulose.

8. A sample holder according to one of the preceding claims **characterized by** a converter material (34.3; 36.3) which upon electron irradiation emits light of a spectral width of more than 50 nm wavelength.

9. A sample holder according to one of the preceding claims **characterized in that** the converter material (34.3; 36.3) is embedded in small volumes (34.2; 34.3) in the carrier.

10. A sample holder according to claim 9 **characterized in that** the volumes (34.2; 36.2) are regularly repetitively arranged at a small relative spacing in two directions.

11. A sample holder according to one of the preceding claims **characterized in that** the converter material (36.3) includes a phosphorus.

12. A sample holder according to one of claims 1 to 11 **characterized in that** the converter material (36.3) includes anthracene.

13. A sample holder according to one of the preceding claims **characterized in that** the converter material (34.3) includes transformed material of the carrier (34.1) in small volumes (34.2).

14. A sample holder according to one of the preceding claims **characterized in that** the converter material (34.3) contains micro- or nano-porous silicon.

15. A sample holder according to one of claims 1 to 8 and 11 to 14 **characterized in that** the converter material (20.2; 38.3) is homogenously distributed on the carrier (20.1; 38.1).

16. A sample holder according to claim 14 **characterized in that** the carrier forms the converter.

17. A sample holder according to one of the preceding claims **characterized in that** the carrier (20.1; 34.1; 36.1; 38.1, 38.2) comprises a semiconductor material, preferably Si, SiO₂, Si₃N₄ or GaAs.

18. A sample holder according to one of the preceding claims **characterized in that** the carrier (38.1) is reinforced at spacings of between 10 and 100 µm by an additional thickening (38.2).

19. A sample holder according to one of the preceding claims **characterized by** a window (32) which is transmissive for electrons, on the side of the carrier (20.1) which is remote from the adhesion layer (20.4), the window preferably containing beryllium or silicon.

20. A sample holder according to claim 19 **characterized in that** the window (32) is designed and arranged to reinforce the carrier (20.1).

21. A sample holder according to one of the preceding claims **characterized by** a protective layer (20.3; 34.4; 36.4; 38.4) between the converter (20.2; 34.2, 34.3; 36.3, 36.3; 38.3) and the adhesion layer (20.4; 34.5; 36.5; 38.5) which is adapted to protect the converter from contamination by the sample (24).

22. A sample holder according to one of the preceding claims **characterized by** a nutrient solution container (34) which is releasably fixed to the sample holder and which is adapted to receive the sample (24) and a nutrient solution.

23. Apparatus (10; 10') for near-field optical imaging comprising an electron beam source (12) adapted to emit an electron beam (13) and a sample holder, **characterized in that** the sample holder (20; 20'; 34; 36; 38) is designed in accordance with one of claims 1 to 21.

24. Apparatus according to claim 23 **characterized by** a vacuum arrangement (18) which is designed in such a way that a converter (20.2; 34.2, 34.3; 36.3, 36.3; 38.3) connected to the sample holder (20; 20'; 34; 36; 38) can be excited in vacuum by the electron beam (13).

25. Apparatus according to one of claims 23 and 24 **characterized in that** the electron beam (13) can be passed by means of a deflection unit (14) in a scanning raster mode over the plane of the sample holder (20; 20'; 34; 36; 38) in which a converter material (20.2; 34.3; 36.3; 38.3) is arranged.

26. Apparatus according to one of claims 23 to 25 **characterized in that** the vacuum arrangement (18) is such that a sample (24) to be investigated is disposed on the side of the converter (20) remote from the electron beam source (12) in a normal-pressure atmosphere.

27. Apparatus according to one of claims 23 to 26 **characterized in that** the electron beam source (12) is adapted to emit an electron beam with an electron energy of between 100 eV and 30 keV.

28. Apparatus according to one of claims 23 to 27 **characterized by** spectral analysis means (30) which are arranged and designed to use light emitted by the converter material (20.2; 34.3; 36.3; 38.3) or the sample (24) for spectral analysis of the sample.

29. A production process for a sample holder (20; 20'; 34; 36; 38) for use in an apparatus (10; 10') for near-field optical imaging, in which a carrier (20.1; 34.1; 36.1; 38.1,38.2) is provided with a converter (20.2; 34.2, 34.3; 36.3, 36.3; 38.3) which contains a converter material and is adapted to emit light of small lateral source extent upon irradiation with an electron beam, and in which the carrier is then coated with an adhesion layer (20.4; 34.5; 36.5; 38.5), wherein the adhesion layer (20.4; 34.5; 36.5; 38.5) is applied in the form of mono- or bi-layers by attraction or by bursting vesicles.

30. A process according to claim 29 **characterized by** a step of coating the carrier (20.1; 34.1; 36.1; 38.1, 38.2) with a protective layer (20.3; 34.4; 36.4; 38.4), in which a polyacryl is firstly applied as a monomer and then cross-linked by UV-irradiation to provide a two-dimensional mono-layer.
